Europäisches Patentamt

European Patent Office

Office européen des brevets

(11) Veröffentlichungsnummer: **0 455 028 A1**

# EUROPÄISCHE PATENTANMELDUNG

(21) Anmeldenummer: 91105918.6

(22) Anmeldetag: **13.04.91**

(51) Int. Cl.5: **C09D 133/06,** //(C09D133/06, 161:20)

(30) Priorität: **28.04.90 DE 4013710**

(43) Veröffentlichungstag der Anmeldung: **06.11.91 Patentblatt 91/45**

(84) Benannte Vertragsstaaten: **AT BE CH DE ES FR GB IT LI NL SE**

(71) Anmelder: **BAYER AG**

**W-5090 Leverkusen 1 Bayerwerk(DE)**

(72) Erfinder: **Reuter, Knud, Dr.**
**Scheiblerstrasse 99**
**W-4150 Krefeld(DE)**
Erfinder: **Dhein, Rolf, Dr.**
**Deswatinesstrasse 30**
**W-4150 Krefeld 1(DE)**
Erfinder: **Rettig, Rainer, Dr.**
**Auf dem Krämersfeld 23**
**W-5060 Bergisch Gladbach 2(DE)**
Erfinder: **Wieczorrek, Wolfhart**
**Egerstrasse 6**
**W-5000 Koeln 90(DE)**

(54) **Verwendung von Emulsionscopolymerisaten in wässrigen Klarlacken und wässriger Klarlack.**

(57) Die Verwendung von Emulsionscopolymerisaten ausgewählter olefinisch ungesättigter Monomerer in Kombination mit Melaminharzen als Bindemittel für wäßrige Automobilklarlacke und ein wäßriger Automobilklarlack, bestehend aus

A) einem Emulsionscopolymerisat ausgewählter olefinisch ungesättigter Monomerer,

B) einem Melaminharz als Vernetzer und

C) Wasser, sowie gegebenenfalls weiteren Hilfs- und Zusatzmitteln.

EP 0 455 028 A1

Die Erfindung betrifft die Verwendung von Kombinationen aus bestimmten Emulsionscopolymerisaten mit Melaminharzen als Bindemittelkombination in wäßrigen Automobil-Klarlacken, die bei der Lackierung von Automobil-Karrosserien zur Herstellung der obersten Deckschicht eingesetzt werden können, sowie einen, eine derartige Bindemittelkombination enthaltenden, wäßrigen Klarlack.

Zur Herstellung von Automobil-Lackierungen kann zwischen verschiedenen, technisch gebräuchlichen Varianten gewählt werden. Zwar wird im allgemeinen die Grundierung mittels Elektrotauchgrundierung in wäßriger Phase appliziert, jedoch können für Füller und Basislack (basecoat) sowohl wasserverdünnbare als auch organisch gelöste Systeme eingesetzt werden. Aus Gründen der Arbeitssicherheit und des Umweltschutzes, aber auch der Rohstoffersparnis sind wasserverdünnbare Lacksysteme zu bevorzugen, doch bestehen bis heute verschiedene technische Probleme bei der Realisierung eines Aufbaus der Automobillackierung aus wäßriger Phase. Insbesondere fehlt eine technisch nutzbare Problemlösung für den wäßrigen Klarlack (clear-coat), der über base-coats (metallic oder pigmentiert) als vierte Schicht aufgebracht wird, so daß ein kompletter Lackaufbau aus wäßriger Phase bisher nicht realisiert werden kann.

Obwohl sich zahlreiche Veröffentlichungen mit der Herstellung von wäßrigen Bindemitteln auf Basis von Copolymerisaten olefinisch ungesättigter Verbindungen befassen, wird mit der vorliegenden Erfindung erstmals ein wäßriger Klarlack zur Verfügung gestellt, der allen Anforderungen der Automobilserienlackierung an einen wäßrigen Decklack genügt.

Die US-PS 3 661 827 (Ashland Oil) betrifft ein Verfahren zur Herstellung eines in Wasser dispergierbaren Acryllack-Überzugsmittels (kein Emulsionspolymerisat!). Nach Ansicht der Autoren der DE-OS 2 357 152 genügt dieses Produkt jedoch nicht den Anforderungen der Personen- und Lastkraftfahrzeughersteller an einen erstklassigen Lack auf wäßriger Basis.

Die DE-OS 2 357 152 (US-PS 4 164 488) beschreibt wäßrige, wärmehärtende Acryllack-Überzugsmittel, die erstmals als wäßrige Systeme brauchbare Automobillackierungen ergeben sollen. Die besondere Eignung des Produkts soll bei der Verwendung als pigmentiertes Lackbindemittel deutlich werden; eine besondere Verwendung oder Eignung als Klarlack wird nicht dargelegt. Aus der Beschreibung wird deutlich, daß die entsprechend DE-OS 2 357 152 hergestellten Produkte Lösungspolymerisate sind. Durch besondere Maßnahmen bei der Zusammensetzung wird eine partielle Wasserlöslichkeit des fertigen Polymerisats erzeugt: Infolge eines COOH-OH-Gruppenverhältnisses von 1:0,2 bis 1:1,8 sollen etwa 30 bis 50 Gew.-% des Polymerisats in dispergierter Form vorliegen, während die restlichen 50 bis 70 Gew.-% löslich sind und in dem wäßrigen Medium in gelöster Form vorliegen.

In der US-PS 3 862 071 werden ganz ähnliche Systeme aus teilweise löslichen, teilweise dispergierten Polymerisaten beschrieben, die mindestens 0,25 Gew.-% einer dispergierten Aluminiumbronze enthalten. Auch aus dieser Anmeldung wird sichtbar, daß wärmehärtende Amino-harzvernetzende Automobillacke auf Acrylharzbasis besonders dann brauchbare Ergebnisse liefern, wenn teilweise wasserlösliche Polymerisate Verwendung finden.

Dieses Prinzip wird in der DE-PS 2 918 067 auf eine Kombination von speziellen Emulsionspolymerisaten übertragen. Auch diese wäßrigen Lacksysteme werden mit Aminoharzen vernetzt. Die Produkte können aber in einer Reihe von Punkten, z.B. der Filmhärte, trotz hoher Einbrenntemperatur, der Lösungsmittelfestigkeit oder der Haftung auf dem Untergrund nicht befriedigen. Aus der Beschreibung wird deutlich, daß insbesondere pigmentierte Lacke aus den erfindungsgemäßen Polymerisat-Aminoharz-Mischungen hergestellt werden sollen, wobei eine besondere Eignung für Klarlacke oder gar Automobil-clear-coats nicht abzuleiten ist.

In der DE-OS 2 531 802 werden wäßrige Lacksysteme auf Basis von Acrylat-Emulsionspolymerisaten und Melaminharzen beschrieben, welche z.B. den Produkten der US-PS 3 862 071 (s.o.) überlegen sein sollen, Die Acrylpolymeren der DE-OS 2 531 802 unterscheiden sich jedoch von denen der US-PS 3 862 071 nur durch die Herstellung des dispergierten Anteils nach der Emulsionspolymerisations-Technik und einen geringeren Prozentsatz an wasserlöslichem Acrylcopolymeren in der Bindemittelmischung. Auf einen solchen löslichen Anteil wird auch in der DE-OS 2 531 802 nicht verzichtet,

In der europäischen Patentanmeldung EP-A-0 253 251 werden Klarlacke auf Acrylharzbasis mit Aminoplasten als zweiter Komponente genannt, die bei Anwesenheit löslich machender oder dispergierender Carboxylat-Gruppen auch als wäßriges System appliziert werden können, Da die Produkte für Dosenlacke tiefziehfähige Beschichtungen ausbilden müssen, wird in den Acrylpolymeren auf funktionelle Gruppen wie Hydroxylgruppen verzichtet; d.h., die Copolymeren enthalten kein Hydroxyalkylacrylat oder -methacrylat als Monomerbaustein,

In der EP-A-0 029 597 wird die Lehre der DE-OS 2 357 152 von derselben Anmelderin dahingegehend variiert, daß für sonst ähnliche Polymerisate zusätzlich UV-Stabilisatoren zwecks Verbesserung der Wetterbeständigkeit, z.B. entsprechender Klarlacke, zugesetzt werden, Ansonsten macht auch diese Patentanmeldung deutlich, daß erhebliche Anteile in Wasser gelöster Acrylpolymerer neben 50 % dispergierter Anteile

2

für gute Lackeigenschaften erforderlich sein sollen. Die Anmelderin betont außerdem, daß externe Emulgatoren nicht enthalten sein dürfen.

In die gleiche Richtung gehen eine Reihe von technischen Hinweisen zur Herstellung optimaler wäßriger Acryllack-Systeme im Artikel von Y. Nakayama, T. Watanabe und I. Toyomoto (Kansai Paint) "High Performance Coatings From Blends of Emulsions and Water-Soluble Resins" im Journal of Coatings Technology, Vol.56, No. 716, Sept. 1984, S. 73 ff. Zum einen wird die Notwendigkeit der Mischung von wäßrigen dispergierbaren mit wasserlöslichen Acrylpolymeren betont, zum anderen wird auf die Schädlichkeit oberflächenaktiver Additive wie Emulgatoren (surfactants) für die Wasserbeständigkeit und Haftung auf dem Untergrund bei hoher Luftfeuchtigkeit hingewiesen, so daß soap-free acrylic emulsions" empfohlen bzw. hergestellt werden.

Auch in EP-A-0 001 489 wird der Nachteil wäßriger Emulsionspolymerisate, die mit niedermolekularen Emulgatoren hergestellt wurden, hervorgehoben: Durch die Anwesenheit der für die Stabilisierung der Polymerdispersion erforderlichen Emulgatoren wird z.B. die Beständigkeit der Lackfilme gegen Feuchtigkeits- und Wettereinflüsse erheblich gemindert. Zur Überwindung dieser technischen Nachteile wird in EP-A-0 001 489 die Herstellung sog. "sterisch stabilisierter" Dispersionspolymerisate beschrieben. Die Polymeren werden dabei nicht in wäßriger Phase oder wäßriger Emulsion hergestellt, sondern erst nach Beendigung der verschiedenen, in nichtwäßrigen Lösungsmitteln durchzuführenden Polymerisationsschritte in eine wäßrige Dispersion überführt.

Dieser Gedanke wird auch in der EP-B-0 038 127 aufgegriffen. Für den wäßrigen metallic-base-coat werden in EP-B-0 038 127 pseudoplastische oder thixotrope Mikrogel-Emulsionen auf Acrylat-Copolymerbasis beschrieben, die mit Aminoharzen vernetzt werden,

Als Acrylat-Bindemittel für den clear-coat über den Metallic-Lack werden in EP-B-0 038 127 verschiedene Möglichkeiten dargestellt:

1) Lösungspolymerisate in nichtwäßrigen Lösungsmitteln (Beispiele 1, 2, 4, 5)
2) In nichtwäßrigen, aber wassermischbaren Lösungsmitteln wie Isopropanol hergestellte Lösungspolymerisate, die anschließend in eine wäßrige Lösung überführt werden (Beispiel 3)
3) Wäßrige Dispersionspolymere (ohne Beispiel, Sp. 14, Zeile 22-29).

Für den clear-coat wird für den Fall, daß er aus wäßriger Phase appliziert werden soll, auch die Verwendung eines Acrylpolymers, das nach der Emulsionspolymerisations-Technik hergestellt sein kann, in Betracht gezogen (Sp. 14, Z. 30-32, ohne Beispiel). Nähere Erläuterungen zu den techn. Maßnahmen, die dann ergriffen werden müßten, um einen verarbeitbaren Klarlack herzustellen (verwendete Additive, Vernetzer und Hilfsmittel) werden aber nicht gegeben. Weiterhin gibt die praktische Ausführung der Beispiele keinen Hinweis auf eine besondere Brauchbarkeit wäßriger Emulsionspolymere, welche nicht als Mikrogele vorliegen.

Zudem ist die in EP-B-0 038 127 beschriebene Acrylatlösung durch ein zweistufiges und damit aufwendiges Herstellungsverfahren gekennzeichnet und kein Emulsionspolymerisat. In Anbetracht der zahlreichen, u.a. aus der EP-A-0 001 489 der gleichen Anmelderin zitierten Bedenken gegen die Emulgatoren in Emulsionspolymerisaten und gegen ausschließlich in Wasser dispergierte Systeme ohne größere Anteile gelöster Polymerer kann somit aus EP-B-0 038 127 in Verbindung mit dem genannten Stand der Technik kein technisch nutzbarer wäßriger Automobil-clear-coat abgeleitet werden, der mit den erfindungsgemäßen Klarlacken vergleichbar wäre.

Aus der DE-OS 3 803 522 ist bekannt, daß wasserdispergierbare Acrylpolymere in Verbindung mit speziellen, hydrophoben Melaminharzen als Vernetzer, welche im Molgewicht mindestens bei 500 liegen müssen, zu pigmentierten, insbesondere mit metallischen Pigmenten versehenen Beschichtungssystemen verarbeitet werden können. Diese Systeme eignen sich gemäß der Lehre der DE OS 3 803 522 ganz besonders als untere Schicht zweier "naß-in naß" zu applizierenden Lackschichten. Für eine etwaige Eignung der Lacksysteme für den clear-coat gibt es keine Hinweise, vielmehr wird das Pigment als integraler Bestandteil der Beschichtungszusammensetzung ausdrücklich mitbeansprucht. Als clear-coat werden in DE-OS 3 803 522 nur organisch gelöste Produkte genannt.

Die Bindemittelsysteme der DE-OS 3 803 522 (Acrylcopolymer + hydrophobes, hochmolekulares Melaminharz) ergeben, wenn das Pigment weggelassen wird, schlechte Glanzwerte im Klarlack und sind darüber hinaus infolge des erhöhten technischen Aufwandes zur Inkorporierung des hydrophoben Melaminharzes in das wäßrige System wenig praxisgerecht, so daß aus DE-OS 3 803 522 kein brauchbares clear-coat-System abgeleitet werden kann.

In der EP-A-0 287 144 werden mindestens zweistufig durch Emulsionspolymerisation hergestellte Acrylpolymere spezieller, ausschließlich auf die Verwendung als metallic-base-coat zugeschnittener Zusammensetzung beschrieben, Abgesehen von der aufwendigen Herstellungsweise, sind keine Hinweise auf die Verwendung als clear-coat enthalten,

In der DE-OS 3 734 755 werden Polyacrylatemulsionen bzw, -dispersionen als temporärer Oberflächenschutz mit verringerter Korrosivität beschrieben, Lehren für die Herstellung von wäßrigen clear-coats lassen sich aus diesen unvernetzten, vom Substrat leicht wieder zu entfernenden Beschichtungen nicht entnehmen,

Die DE-OS 2 840 574 beschreibt wasserlösliche Acryl-Einbrennlacke. Es handelt sich um Lösungspolymerisate für Metalleffekt-Lacke, die sich aber technisch wegen des unzureichenden Metalleffekts und einer aufwendigen Herstellung nicht durchsetzen konnten, Für wäßrige Klarlacke sind sie wegen der ungünstigen rheologischen Eigenschaften der wäßrigen Lösungen, die durch einen aus Umweltaspekten unerwünschten Zusatz organischer Hilfslöser in beträchtlichen Mengen kompensiert werden müssen, der Hydrophilie des Bindemittelsytems, was z.B. beim naß-in-naß-Aufbringen auf einen wäßrigen base-coat wegen Filmstörungen nachteilig ist, und der Beschränktheit auf spezielle, ausgewählte Vernetzerharze nicht brauchbar,

Zusammenfassend kann somit festgestellt werden, daß technisch brauchbare wäßrige Automobil-Klarlacke bislang nicht bekannt geworden sind und erstmals mit der vorliegenden Erfindung zur Verfügung gestellt werden,

Gegenstand der Erfindung ist die Verwendung von

A) Emulsionscopolymerisaten aus

    a) 0 - 50 Gew.-% Styrol, α-Methylstyrol oder eines Gemischs dieser Monomeren,

    b) 0 - 50 Gew.-% Methylmethacrylat,

    c) 10 - 45 Gew.-% einer Acrylat-Komponente, bestehend aus mindestens einem Alkylacrylat mit 1 bis 8 Kohlenstoffatomen im Alkylrest,

    d) 5 - 30 Gew.-% Hydroxyethyl-, 2- oder 3-Hydroxypropyl-, 2-, 3- oder 4-Hydroxybutyl-(meth)acrylat oder eines beliebigen Gemischs dieser Monomeren,

    e) 1 - 15 Gew.-% Acrylsäure, Methacrylsäure oder eines Gemischs dieser Säuren und

    f) 0 - 15 Gew.-% an anderen Comonomeren

deren Carboxylgruppen zu 0 bis 100, vorzugsweise 0 bis 80 und besonders bevorzugt 0 bis 50 % in mit einem aliphatischen Amin oder mit Ammoniak neutralisierter Form vorliegen, wobei sich die genannten Prozentsätze zu 100 ergänzen und die Komponenten a) und b) insgesamt in einer Menge von 10 - 70 Gew.-% zum Einsatz gelangen,

in Kombination mit

B) 10 - 40 Gew.-%, bezogen auf das Gesamtgewicht der Komponenten A) und B), eines Melaminharzes als Bindemittelkombination für wäßrige Automobil-Klarlacke.

Gegenstand der Erfindung ist auch ein wäßriger Automobil-Klarlack, bestehend aus

A) 60 - 90 Gew.-%, bezogen auf das Gesamtgewicht der Komponenten A) und B), eines Emulsionscopolymerisats aus

    a) 0 - 50 Gew.-% Styrol, α-Methylstyrol oder eines Gemischs dieser Monomeren,

    b) 0 - 50 Gew -% Methylmethacrylat,

    c) 10 - 45 Gew.-% einer Acrylat-Komponente, bestehend aus mindestens einem Alkylacrylat mit 1 bis 8 Kohlenstoffatomen im Alkylrest,

    d) 5 - 30 Gew.-% Hydroxyethyl-, 2- oder 3-Hydroxypropyl-, 2-, 3- oder 4-Hydroxybutyl-(meth)acrylat oder eines beliebigen Gemischs dieser Monomeren,

    e) 1 - 15 Gew.-% Acrylsäure, Methacrylsäure oder eines Gemischs dieser Säuren und

    f) 0 - 15 Gew.-% an anderen Comonomeren

deren Carboxylgruppen zu 0 bis 100, vorzugsweise 0 bis 80 und besonders bevorzugt 0 bis 50 % in mit einem aliphatischen Amin oder mit Ammoniak neutralisierter Form vorliegen, wobei sich die genannten Prozentsätze zu 100 ergänzen und die Komponenten a) und b) insgesamt in einer Menge von 10 - 70 Gew.-% zum Einsatz gelangen,

B) 10 - 40 Gew.-%, bezogen auf das Gesamtgewicht der Komponenten A) und B), eines Melaminharzes,

C) Wasser und gegebenenfalls weiteren Hilfs- und Zusatzmitteln.

Der erfindungsgemäße wäßrige Klarlack besteht, bezogen auf das Gewicht der Komponenten A) und B), zu 60 bis 90, vorzugsweise 65 bis 85 Gew.-% aus der Komponente A), zu 10 bis 40, vorzugsweise 15 bis 35 Gew.-% aus der Komponente B).

Die Kombination der Komponenten A) und B) stellt die erfindungswesentliche Bindemittelkombination dar. Die Komponente C) besteht aus Hilfs- und Zusatzmitteln, insbesondere dem zwingend vorliegenden Wasser, sowie gegebenenfalls weiteren Hilfs- und Zusatzmitteln der an sich bekannten Art wie zusätzliche Vernetzer, rheologische Hilfsmittel, Benetzungshilfsmittel, Katalysatoren, organische Lösungsmittel oder Lichtschutzmittel.

Die erfindungswesentliche Komponente A) besteht aus einem Emulsionscopolymerisat aus den oben bereits genannten Monomeren a) bis f), wobei als Monomomere c) beispielsweise Methylacrylat, Ethylacrylat, n-Butylacrylat, n-Hexylacrylat oder n-Octylacrylat und als gegebenenfalls mitzuwendende Comonomere f) beispielsweise Vinyltoluol, Alkylmethacrylate mit 2 bis 18 Kohlenstoffatomen im Alkylrest, Alkylacrylate mit 9 bis 18 Kohlenstoffatomen im Alkylrest, N-Vinylpyrrolidon, Vinyl-alkyl-ketone mit 1 bis 4 Kohlenstoffatomen, Vinylalkyl-carboxylate mit 1 bis 18 Kohlenstoffatomen im Alkylrest, Alkylester der Malein-, Fumar- oder Itaconsäure mit jeweils 1 bis 4 Kohlenstoffatomen in den Alkylresten und/oder Vinylsulfonsäuresalze in Betracht kommen.

Besonders bevorzugte Emulsionscopolymerisate A) sind solche, die aus

a) 0 bis 40, besonders bevorzugt 20 bis 40 Gew.-% Styrol,

b) 5 bis 50, besonders bevorzugt 5 bis 20 Gew.-% Methylmethacrylat,

c) 25 bis 40 Gew.-% einer Alkylacrylat-Komponente, bestehend aus mindestens einem Alkylacrylat mit 4 bis 8 Kohlenstoffatomen im Alkylrest,

d) 12 - 20 Gew.-% Hydroxyethyl- oder 2- oder 3-Hydroxypropylmethacrylat oder eines Gemischs dieser Monomeren,

e) 2 - 10 Gew.-% Methacrylsäure und

f) 0 - 15 Gew.-% an anderen Comonomeren der zuletzt genannten Art

in copolymersierter Form bestehen, wobei die genannten Prozentsätze sich zu 100 ergänzen und die Gesamtmenge der Komponenten a) und b) bei 35 bis 50, insbesondere bei 35 bis 45 Gew.-% liegt.

Grundsätzlich sind solche Copolymerisate A) bevorzugt, in denen die Mengenverhältnisse der Komponenten d) und e) einem Äquivalentverhältnis von Carboxyl- zu Hydroxylgruppen von 1:1,5 bis 1:4,5, insbesondere von 1:1,9 bis 1:4,5 entsprechen.

Die Herstellung der Emulsionspolymerisate A) kann nach den üblichen Emulsionspolymerisationsverfahren erfolgen wie sie z.B. in Houben-Weyl, Methoden der organischen Chemie, Erweiterungs- und Folgebände zur 4. Auflage, Band E 20/Teil 1, S. 218-313, beschrieben sind.

Dies bedeutet selbstverständlich, daß bei der Herstellung der Emulsionspolymerisate im wäßrigen Milieu die an sich bekannten Polymerisationshilfsmittel mitverwendet werden.

Die Menge des Wassers wird im allgemeinen so bemessen, daß wäßrige Emulsionen der Copolymerisate mit einem Festkörpergehalt von 20 bis 60, vorzugsweise von 35 bis 50 Gew.-% resultieren.

Die so hergestellten und als wäßrige Emulsion vorliegenden Emulsionspolymerisate werden mit den übrigen Bestandteilen zu den gebrauchsfertigen Klarlacken kombiniert.

Als Vernetzer werden nicht veretherte oder mit gesättigten Alkoholen mit 1 bis 4 Kohlenstoffatomen teil- oder vollveretherte Melaminharze, bevorzugt vollmethylveretherte Melaminharze, wie sie beispielsweise in der FR-PS 943 411 oder bei D.H. Solomon, The Chemistry of Organic Filmformers, John Wiley & Sons, Inc., New York 1967, S. 235-240, beschrieben sind, eingesetzt.

Um eine ausreichende Vernetzung der Lackfilme zu gewährleisten, empfiehlt sich oftmals die Mitverwendung von Säurekatalysatoren, deren Art und Konzentration von den gewählten Einbrennbedingungen und der Natur der eingesetzten Melaminharze abhängt. Geeignet sind beispielsweise mit Aminen blockierte oder nicht blockierte Dialkylnaphthalinmono- und -disulfonsäuren und Alkylbenzolsulfonsäuren wie z.B. Toluolsulfonsäuren.

Zur Verbesserung der rheologischen Eigenschaften werden oft handelsübliche Verdickungsmittel, beispielsweise solche auf Polyacrylat- oder Polyurethan-Basis mitverwendet. Die rheologischen Eigenschaften können zusätzlich durch Variation des pH-Wertes (durch Art und Konzentration der zugegebenen Neutralisationsamine und durch gegebenenfalls mitverwendete Hilfslösungsmittel) beeinflußt werden.

Obwohl die Emulsionspolymerisate wegen der Anwesenheit der während der Emulsionspolymerisation im allgemeinen eingesetzten externen Emulgatoren lagerstabil sind, werden die in den Copolymerisaten vorliegenden Carboxylgruppen oftmals zu bis zu 100 %, vorzugsweise bis zu 80 % und besonders bevorzugt bis zu 50 % neutralisiert, wobei als Neutralisationsmittel Ammoniak oder aliphatische Amine wie beispielsweise Triethylamin, Ethanolamin, Dimethylethanolamin oder Triethanolamin in Betracht kommen.

Geeignete Hilfslösungsmittel, die gegebenenfalls in Mengen von bis zu 10 Gew.-%, bezogen auf Gesamtlack, mitverwendet werden, sind beispielsweise ein- oder mehrwertige Alkohole, Kohlenwasserstoffe, Ether, Ester und Ketone, z,B. Ethyl- oder Butylglykol sowie deren Acetate, Ethyl- oder Butyldiglykol, Ethylenglykoldimethylether oder Methoxypropanol.

Weitere Hilfs- und Zusatzmittel der bereits oben angesprochenen Art können bei der Zubereitung der gebrauchsfertigen Klarlacke selbstverständlich ebenfalls mitverwendet werden. Die so hergestellten Klarlacke weisen einen Festkörpergehalt von 25 bis 50, vorzugsweise 30 bis 45 Gew.-% und eine Viskosität von 15 bis 60, vorzugsweise 18 bis 40 sec (DIN 4 Becher / 25°C) auf.

Der Lackauftrag erfolgt durch übliche Methoden der Lackiertechnik, vorzugsweise Verspritzen mit einer Fließbecherpistole. Die Applikation kann naß-in-naß (nach kurzem Zwischenlüften) oder auf vorgetrocknete lösemittelhaltige Basislacke erfolgen. Besonders vorteilhaft ist es natürlich aus Gründen der Umweltfreundlichkeit des gesamten Lackaufbaus, wenn der erfindungsgemäße Klarlack auf einer hydro-base-coat-Schicht aufgebracht wird, wobei eine naß-in-naß Applikation (nach kurzem Zwischenlüften) ebenso möglich ist, wie eine Applikation auf einem vorgetrockeneten Hydro-Basislack.

Die mit Klarlack überzogenen Substrate werden im allgemeinen nach der Applikation innerhalb des Temperaturbereichs von 10 bis 50, vorzugsweise 25 bis 40° C kurz abgelüftet und bei ca. 100 bis 160° C, vorzugsweise 120 bis 140° C während eines Zeitraums von ca. 10 bis 60, vorzugsweise 20 bis 30 min eingebrannt. Oftmals empfiehlt sich zur Verbesserung der Blasenfreiheit bei höheren Schichtdicken auch eine Zwischentrocknung bei 80° C. Die so erhaltenen, eingebrannten Lackfilme zeichnen sich durch eine sehr gute Filmoptik und -mechanik bei guten Lösungsmittelfestigkeiten aus,

In den nachfolgenden Beispielen beziehen sich alle Angaben in "Teilen" auf das Gewicht.

Herstellungsbeispiele für erfindungsgemäß zu verwendende wäßrige Emulsionspolymerisate

Acrylatdispersion 1

In einem Glasreaktor mit wirksamer Rühreinrichtung werden nach dem üblichen Emulsionspolymerisationsprozeß folgende Komponenten bei 80° c umgesetzt:

| | |
|---|---|
| 613,50 Teile | entionisiertes Wasser |
| 3,90 Teile | Polyethoxyliertes 3-Benzyl-4-hydroxybiphenyl (ca. 10 Mol Ethylenoxid pro Mol der Hydroxyverbindung (= Emulgator 1) |
| 0,75 Teile | Natrium-di-sec.-butylnaphthalinsulfonat (= Emulgator 2) |
| 1,25 Teile | Ammoniumperoxodisulfat |
| 117,00 Teile | Styrol |
| 53,00 Teile | Methylmethacrylat |
| 141,00 Teile | Butylacrylat |
| 72,00 Teile | Hydroxyethylmethacrylat |
| 25,00 Teile | Methacrylsäure |
| 7,40 Teile | Dodecylmercaptan |

Nach Ende der Polymerisation wird durch Zugabe von 0,25 Teilen Ammoniumperoxodisulfat bei 80° c nachpolymerisiert und anschließend mit 3,26 Teilen Dimethylethanolamin teilneutralisiert.

Die Emulsion war auch nach einem halben Jahr Lagerung bei 23° C einwandfrei und zeigte keinen Bodensatz.

Acrylatdispersion 2

Wie Acrylatdispersion 1, jedoch wird mit 1,63 Teilen Dimethylethanolamin neutralisiert.

Acrylatdispersion 3

Wie Acrylatdispersion 1, jedoch wird mit 6,52 Teilen Dimethylethanolamin neutralisiert.

Acrylatdispersion 4

Wie Acrylatdispersion 1, jedoch wird mit 5,47 Teilen Triethanolamin neutralisiert.

Acrylatdispersion 5

Wie Acrylatdispersion 1, jedoch wird mit 3,67 Teilen Triethylamin neutralisiert.

Acrylatdispersion 6

Wie Acrylatdispersion 1, jedoch wird mit 1,75 Teilen 33 %igem wäßrigem Ammoniak neutralisiert.

Acrylatdispersion 7

Entsprechend Acrylatdispersion 1 werden folgende Komponenten umgesetzt:

| | |
|---|---|
| 613,80 Teile | entionisiertes Wasser |
| 3,90 Teile | Emulgator 1 |

| 0,75 Teile | Emulgator 2 |
| 1,25 Teile | Ammoniumperoxodisulfat |
| 117,00 Teile | Styrol |
| 63,00 Teile | Methylmethacrylat |
| 141,00 Teile | Butylacrylat |
| 72,00 Teile | Hydroxyethylmethacrylat |
| 11,10 Teile | Methacrylsäure |
| 7,40 Teile | Dodecylmercaptan |

Nach Ende der Polymerisation wird durch Zugabe von 0,25 Teilen Ammoniumperoxodisulfat bei 80°C nachpolymerisiert und anschließend mit 3,26 Teilen Dimethylethanolamin teilneutralisiert.

Acrylatdispersion 8

Entsprechend Acrylatdispersion 1 werden folgende Komponenten umgesetzt:

| 614,50 Teile | entionisiertes Wasser |
| 3,90 Teile | Emulgator 1 |
| 0,75 Teile | Emulgator 2 |
| 1,63 Teile | Ammoniumperoxodisulfat |
| 117,00 Teile | Styrol |
| 53,00 Teile | Methylmethacrylat |
| 141,00 Teile | Butylacrylat |
| 72,00 Teile | Hydroxyethylmethacrylat |
| 21,00 Teile | Methacrylsäure |
| 9,62 Teile | Dodecylmercaptan |

Nach Ende der Polymerisation wird durch Zugabe von 0,325 Teilen Ammoniumperoxodisulfat bei 80°C nachpolymerisiert und anschließend mit 3,26 Teilen Dimethylethanolamin teilneutralisiert.

Acrylatdispersion 9

Entsprechend Acrylatdispersion 1 werden folgende Komponenten umgesetzt:

| 613,00 Teile | entionisiertes Wasser |
| 3,90 Teile | Emulgator 1 |
| 0,75 Teile | Emulgator 2 |
| 0,63 Teile | Ammoniumperoxodisulfat |
| 117,00 Teile | Styrol |
| 53,00 Teile | Methylmethacrylat |
| 141,00 Teile | Butylacrylat |
| 72,00 Teile | Hydroxyethylmethacrylat |
| 21,00 Teile | Methacrylsäure |
| 3,70 Teile | Dodecylmercaptan |

Nach Ende der Polymerisation wird durch Zugabe von 0,125 Teilen Ammoniumperoxodisulfat bei 80°C nachpolymerisiert und anschließend mit 3,26 Teilen Dimethylethanolamin teilneutralisiert.

Acrylatdispersionen 10-14

Entsprechend Acrylatdispersion 1 werden folgende Komponenten, wie in der Tabelle 1 zusammengefaßt, umgesetzt (Zahlenangaben = Gewichtsteile)

Tabelle 1

| 10 | 11 | 12 | 13 | 14 | Acrylat-dispersionen |
|---|---|---|---|---|---|
| 1247,0 | 1251,0 | 1246,0 | 1251,0 | 1250,0 | entionisiertes Wasser |
| 7,8 | 7,8 | 7,8 | 7,8 | 7,8 | Emulgator 1 |
| 1,5 | 1,5 | 1,5 | 1,5 | 1,5 | Emulgator 2 |
| 2,5 | 2,5 | 2,5 | 2,5 | 2,5 | Ammoniumperoxo-disulfat |
| 105,0 | 105,0 | 105,0 | 339,0 | 105,0 | Styrol |
| 234,0 | 281,0 | 247,0 | - | 247,0 | Methylmeth-acrylat |
| 283,0 | 283,0 | 272,0 | 283,0 | 72,0 | Butylacrylat |
| 144,0 | 97,0 | 141,0 | 144,0 | - | Hydroxyethyl-methacrylat |
| - | - | - | - | 141,0 | Hydroxypropyl-methacrylat* |
| 47,0 | 43,0 | 47,0 | 43,0 | 43,0 | Methacrylsäure |
| 14,8 | 14,8 | 14,8 | 14,8 | 14,8 | Dodecylmercaptan |

* technisches Gemisch aus 2- und 3-Hydroxypropylmeth-acrylat

In allen Fällen wurde nach Ende der Polymerisation durch Zugabe von 0,5 Teilen Ammoniumperoxodisulfat bei 80° C nachpolymerisiert und anschließend mit 6,5 Teilen Dimethylethanolamin teilneutralisiert.

8

Herstellung eines wäßrigen Klarlackes

Geeignete Formulierungen für wäßrige Klarlacke sind in Tabelle 2 zusammengestellt.

Tabelle 2   Zusammensetzungen der Klarlackformulierungen

| Formulierung Nr. | 1 | 2 | 3 | 4 | 5 | 6 | 7 |
|---|---|---|---|---|---|---|---|
| Melaminharz 1* | | 11,0 | | 11,0 | | | |
| Melaminharz 2* | 10,2 | | 10,2 | | 10,2 | 10,2 | 10,5 |
| Verlaufmittel 1* | 1,2 | 1,2 | 1,2 | 1,2 | 1,2 | 1,2 | 1,2 |
| Verlaufmittel 2* | 0,6 | 0,6 | 0,6 | 0,6 | 0,6 | 0,6 | 0,6 |
| Butylglykol | 3,9 | | 4,0 | | 4,1 | 4,1 | 4,1 |
| Ethyldiglykol/ Butyldiglykol | | 3,2 | | 3,3 | | | |
| Säurekatalysator 1* | | | | | | | 0,3 |
| Säurekatalysator 2* | 0,8 | | 0,8 | | 0,8 | 0,8 | |
| Lichtschutzmittel 1* | 1,8 | 1,8 | 1,8 | 1,8 | 1,7 | 1,7 | 1,8 |
| Lichtschutzmittel 2* | | 1,8 | | 1,8 | | | |
| Lichtschutzmittel 3* | 1,8 | | 1,8 | | 1,7 | 1,7 | 1,8 |
| Dimethylethanolamin, 10 % in Wasser | 6,1 | 6,0 | 5,9 | 5,9 | 5,8 | 5,8 | 6,0 |
| Benetzungshilfsmittel* | 1,2 | 1,2 | 1,2 | 1,2 | 12 | 1,2 | 1,2 |
| entionisiertes Wasser | 6,8 | 8,1 | 8,1 | 9,2 | 9,9 | 9,5 | 7,8 |
| Acrylatdispersion 1 | 60,6 | 60,2 | | | | | |
| Acrylatdispersion 6 | | | 59,5 | 59,1 | | | |
| Acrylatdispersion 8 | | | | | 57,8 | | |
| Acrylatdispersion 9 | | | | | | 58,3 | 59,7 |
| Verdickungsmittel* | 5,0 | 4,9 | 4,9 | 4,9 | 5,0 | 4,9 | 5,0 |
| Summe | 100,0 | 100,0 | 100,0 | 100,0 | 100,0 | 100,0 | 100,0 |
| Auslaufviskosität in sec (DIN 4-Becher, 25°C) | 26 | 20 | 18 | 17 | 19 | 26 | 26 |

Die mit * gekennzeichneten Substanzen sind im Anhang genauer spezifiziert.

Anhang zu Tabelle 2

| | |
|---|---|
| Melaminharz 1: | ®Cymel 327 (Cyanamid Int., Wayne N.J., USA) 90 % Festkörper in i-Propanol |
| Melaminharz 2: | ®Cymel 303 (Cyanamid Int., Wayne N.J., USA) 98 % Festkörper in Wasser |
| Verlaufmittel 1: | ®Additol XW 395 (Hoechst AG, Frankfurt/M., BRD) 50 %ig in Butylglykol |
| Verlaufmittel 2: | ®Resiflow W 50 (Worlee-Chemie GmbH, Hamburg, BRD) 50 %ig in Butylglykol/Isopropanol 4:1 |
| Benetzungshilfsmittel: | Fluortensid FT 929 (Bayer AG, Leverkusen, BRD) 10 %ig in Wasser/Ethanol 8:1 |
| Säurekatalysator 1: | ®Nacure 2501 (King Industries Inc., Norwalk CT, USA) 25 %ig in Isopropanol |
| Säurekatalysator 2: | ®Nacure 1051 (King Industries Inc., Norwalk CT, USA) 50 %ig in Butylglykol |
| Lichtschutzmittel 1: | ®Tinuvin 1130 (Ciba-Geigy Marienberg GmbH, Lautertal, BRD) 20 %ig in Ethyldiglykol/Butyldiglykol 1:1 |
| Lichtschutzmittel 2: | ®Tinuvin 292 (Ciba-Geigy Marienberg GmbH, Lautertal, BRD) 20 %ig in Ethyldiglykol/Butyldiglykol 1:1 |
| Lichtschutzmittel 3: | ®Tinuvin 440 (Ciba-Geigy Marienberg GmbH, Lautertal, BRD) 20 %ig in Butylglykol |
| Verdickungsmittel: | Viscalex HV 30 (Allied Colloids GmbH, Hamburg, BRD) 5 %ig in Wasser |

Die einzelnen Komponenten werden nacheinander gleichmäßig eingerührt und unter Dissolver homogenisiert.

Applikation des wäßrigen Klarlackes

Ein mit Elektrotauchgrundierung (KTL), Füller und Basislack (wäßrig oder lösemittelhaltig)) vorbereitetes Stahlblech wird mit dem Klarlack überschichtet, wobei bei der Applikation eine Temperatur von 20 - 25° C und eine relative Luftfeuchte von 40 bis 70 % eingehalten werden sollte. Die Ausflußrate der Fließbecherpistole liegt abhängig von der Viskosität der jeweiligen Formulierung bei 300-400 ml/min. Die mit einer 1,2 mm starken Düse versehene Spritzpistole wurde mit einem Druck von 3,5-5,0 bar betrieben. Der Lackauftrag erfolgte in drei Spritzgängen, wobei nach dem ersten Spritzgang kurz abgelüftet wurde.

Trocknung der Klarlacke

Die beschichten Bleche wurden 1 bis 5 Minuten bei 40°C abgelüftet, bei 80°C vorgetrocknet und bei 140°C 20 Minuten eingebrannt. Die Verlängerung der Ablüftphasen bringt eine deutliche Verbesserung der Blasenfreiheit. Der erhaltene Klarlackfilm hatte eine Schichtdicke von 35-60 μm.

Prüfung der Klarlackfilme

Die lackierten Substrate werden nach dem Einbrennvorgang zunächst optisch begutachtet. Danach werden die Erichsen-Tiefung (DIN ISO 1520) als Maß für die Elastizität, die Pendelhärte (DIN 53157) als Maß für die Filmhärte und der Glanzgrad (bei 20°- und 60°-Winkel) festgestellt. Im Anschluß wird die Anlösbarkeit mit Toluol, Butylacetat, Methoxypropylacetat und Aceton durch Auflegen eines Lösemittel-getränkten Wattebausches (Einwirkdauer 1 Minute) direkt auf der Lackoberfläche getestet und optisch und mechanisch beurteilt, wobei 0 die beste Wertung (unveränderte Oberfläche) und 5 die schlechteste Wertung (Weglösen des Lackfilmes) darstellt. Anschließend wird die Lösemittel- und Wasserfestigkeit der Filme durch Einwirken der Lösemittel- und Wasserfestigkeit der Filme durch Einwirken der Lösemittel (Ethanol, Xylol/10 Minuten) bzw. des Wassers (Einwirkdauer 24 h) und nachfolgender Beurteilung, wie unter Anlösbarkeit beschrieben untersucht.

Die detaillierten Prüfergebnisse für die erfindungsgemäßen Klarlackformulierungen sind in Tabelle 3 zusammengefaßt.

Tabelle 3:   Prüfergebnisse der Klarlackformulierungen

| Formulierung Nr. | 1 | 2 | 3 | 4 | 5 | 6 | 7 |
|---|---|---|---|---|---|---|---|
| Schichtdicke (µm) | 50 | 40 | 45 | 50 | 40 | 50 | 45 |
| Filmausbildung | 0 | 0 | 0 | 0 | 1 | 0 | 1 |
| Glanz n. Lange 20° | 88 | 89 | 87 | 94 | 95 | 96 | 96 |
| Erichsentiefung (DIN ISO 1520) (mm) | 7,0 | 5,5 | 6,0 | 5,5 | 7,0 | 6,0 | 7,0 |
| Pendelhärte n. König (DIN 53157) (s) | 180 | 169 | 187 | 184 | 171 | 171 | 185 |
| Anlösbarkeit (1. min) (Tol/BuAc/MPA/Ac) | 0000 | 0000 | 0000 | 0000 | 0000 | 0000 | 0000 |
| Xylolbeständigkeit (10 min.) | 0 | 0 | 0 | 0 | 0 | 0 | 0 |
| Ethanolbeständigkeit (10 min.) | 0 | 0 | 0 | 0 | 1 | 0 | 0 |
| Wasserbeständigkeit (24 h) | 0 | 0 | 0 | 0 | 0 | 0 | 0 |

(Bei Lösemittelbeständigkeiten, Anlösbarkeit und Filmausbildung ist
0 jeweils das beste, 5 das schlechteste Ergebnis der Prüfung.

Die anwendungstechnischen Prüfungen an Klarlackfilmen auf lösemittelhaltigem Basislack und auf wäßrigem Basislack zeigten keine Unterschiede. Die Haftung des Klarlackes ist auf beiden Substraten gut.

**Patentansprüche**

1. Verwendung von
   A) Emulsionscopolymerisaten aus
   a) 0 - 50 Gew.-% Styrol, α-Methylstyrol oder eines Gemischs dieser Monomeren,
   b) 0 - 50 Gew.-% Methylmethacrylat,
   c) 10 - 45 Gew.-% einer Acrylat-Komponente, bestehend aus mindestens einem Alkylacrylat mit 1 bis 8 Kohlenstoffatomen im Alkylrest,
   d) 5 - 30 Gew.-% Hydroxyethyl-, 2- oder 3-Hydroxypropyl-, 2-, 3- oder 4-Hydroxybutyl(meth)-acrylat oder eines beliebigen Gemischs dieser Monomeren,
   e) 1 - 15 Gew.-% Acrylsäure, Methacrylsäure oder eines Gemischs dieser Säuren und
   f) 0 - 15 Gew.-% an anderen Comonomeren
   deren Carboxylgruppen zu 0 - 100 % in mit einem aliphatischen Amin oder mit Ammoniak neutralisierter Form vorliegen, wobei sich die genannten Prozentsätze zu 100 ergänzen und die Komponenten a) und b) insgesamt in einer Menge von 10 - 70 Gew.-% zum Einsatz gelangen,
   in Kombination mit

EP 0 455 028 A1

B) 10 - 40 Gew.-%, bezogen auf das Gesamtgewicht der Komponenten A) und B), eines Melaminharzes

als Bindemittelkombination für wäßrige Automobil-Klarlacke.

2. Verwendung gemäß Anspruch 1, dadurch gekennzeichnet, daß man die Mengen der Komponenten Ad) und Ae) so wählt, daß in dem Copolymerisat ein Äquivalentverhältnis von Carboxyl- zu Hydroxylgruppen von 1:1,5 bis 1:4,5 vorliegt.

3. Verwendung gemäß Anspruch 1 und 2, dadurch gekennzeichnet, daß man die Mengen der Komponenten Ad) und Ae) so wählt, daß in dem Copolymerisat ein Äquivalentverhältnis von Carboxyl- und Hydroxylgruppen von 1:1,9 bis 1:4,5 vorliegt.

4. Verwendung gemäß Anspruch 1, dadurch gekennzeichnet, daß die Komponente A) aus einem Copolymerisat aus

   a) 0 - 40 Gew.-% Styrol,
   b) 5 - 50 Gew.-% Methylmethacrylat,
   c) 25 - 40 Gew.-% mindestens eines Alkylacrylats mit 4 bis 8 Kohlenstoffatomen im Alkylrest,
   d) 12 - 20 Gew.-% Hydroxyethylmethacrylat, 2- oder 3-Hydroxypropylmethacrylat oder einem Gemisch dieser Monomeren,
   e) 2 - 10 Gew.-% Methacrylsäure und
   f) 0 - 15 Gew.-% anderen Comonomeren

   besteht, wobei sich die genannten Prozentsätze zu 100 ergänzen, die Komponenten a) und b) in einer Menge von ingesamt 35 - 45 Gew.-% zum Einsatz gelangen und die Mengen der Komponenten d) und e) einem Äquivalentverhältnis von Carboxyl- zu Hydroxylgruppen von 1:1,9 bis 1:4,5 entsprechen.

5. Wäßriger Automobil-Klarlack, bestehend aus

   A) 60 - 90 Gew. -%, bezogen auf das Gesamtgewicht der Komponenten A) und B), eines Emulsionscopolymerisats aus

      a) 0 - 50 Gew.-% Styrol, α-Methylstyrol oder eines Gemischs dieser Monomeren,
      b) 0 - 50 Gew.-% Methylmethacrylat,
      c) 10 - 45 Gew.-% einer Acrylat-Komponente, bestehend aus mindestens einem Alkylacrylat mit 1 bis 8 Kohlenstoffatomen im Alkylrest,
      d) 5 - 30 Gew.-% Hydroxyethyl-, 2- oder 3-Hydroxypropyl-, 2-, 3- oder 4-Hydroxybutyl(meth)acrylat oder eines beliebigen Gemischs dieser Monomeren,
      e) 1 - 15 Gew.-% Acrylsäure, Methacrylsäure oder eines Gemischs dieser Säuren und
      f) 0 - 15 Gew.-% an anderen Comonomeren

      deren Carboxylgruppen zu 0 - 100 % in mit einem aliphatischen Amin oder mit Ammoniak neutralisierter Form vorliegen, wobei sich die genannten Prozentsätze zu 100 ergänzen und die Komponenten a) und b) insgesamt in einer Menge von 10 - 70 Gew.-% zum Einsatz gelangen,

   B) 10 - 40 Gew.-%, bezogen auf das Gesamtgewicht der Komponenten A) und B), eines Melaminharzes,

   C) Wasser und gegebenenfalls weiteren Hilfs- und Zusatzmitteln.

6. Wäßriger Automobil-Klarlack gemäß Anspruch 5, dadurch gekennzeichnet, daß die Menge der Komponenten Ad) und Ae) so gewählt sind, daß ein molares Verhältnis von Carboxyl- zu Hydroxylgruppen von 1:1,5 bis 1:4,5 vorliegt.

7. Wäßriger Automobil-Klarlack gemäß Anspruch 5, dadurch gekennzeichnet, daß das Copolymerisat A) aus

   a) 0 - 40 Gew.-% Styrol,
   b) 5 - 50 Gew.-% Methylmethacrylat,
   c) 25 - 40 Gew.-% einer Alkylacrylat-Komponente, bestehend aus mindestens einem Alkylacrylat mit 4 bis 8 Kohlenstoffatomen im Alkylrest,
   d) 12 - 20 Gew.-% Hydroxyethyl- oder 2- oder 3-Hydroxypropylmethacrylat oder einem Gemisch dieser Monomeren,
   e) 2 - 10 Gew.-% Methacrylsäure und
   f) 0 - 15 Gew.-% anderen Comonomeren,

   in copolymerisierter Form besteht, wobei die genannten Prozentsätze sich zu 100 ergänzen, die

13

Komponenten a) und b) insgesamt in einer Menge von 35 bis 50 Gew.-% vorliegen und die Anteile der Komponente d) und e) einem Äquivalentverhältnis von Carboxyl- zu Hydroxylgruppen von 1:1,9 bis 1:4,5 entsprechen.

**Europäisches Patentamt**

**EUROPÄISCHER RECHERCHENBERICHT**

Nummer der Anmeldung

**EP 91 10 5918**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 132 324 (ROHM AND HAAS CO.)<br>* Seite 9, Zeilen 17-24; Beispiel 2 *<br>— — — | 1 | C 09 D 133/06 //<br>(C 09 D 133/06<br>C 09 D 161:20 ) |
| A | FR-A-2 258 423 (ROHM AND HAAS CO.)<br>* Beispiel 1; Seite 19, Zeilen 32-35 *<br>— — — | 1 | |
| A | DE-A-2 514 741 (FUJI PHOTO FILM)<br>* Seite 16, Zeilen 9-27 *<br>— — — | 1 | |
| A | US-A-4 139 514 (BASSETT)<br>* Tabelle I *<br>— — — — — | 1 | |

| | RECHERCHIERTE SACHGEBIETE (Int. Cl.5) |
|---|---|
| | C 09 D |

Der vorliegende Recherchenbericht wurde für alle Patentansprüche erstellt

| Recherchenort | Abschlußdatum der Recherche | Prüfer |
|---|---|---|
| Den Haag | 25 Juni 91 | SCHUELER D.H.H. |